# EUROPEAN PATENT APPLICATION

(11) **EP 2 400 769 A2**
(43) Date of publication of application: **28.12.2011**
(21) Application number: 11170571.1
(22) Date of filing: 20.06.2011
(51) Int. Cl.: H04N 13/00

(54) **Display apparatus and method for displaying thereof**

(30) Priority: 23.06.2010 KR 20100059618
(71) Applicant: Samsung Electronics Co., Ltd., Yeoungtong-gu Suwon-si, Gyeonggi-do (KR)
(72) Inventor: Lee, Joo-yoen, Gyeonggi-do (KR)
(74) Representative: Hewett, Jonathan Michael Richard

(57) **Abstract**

A display apparatus and displaying method are provided. The display apparatus includes a display unit, a communication interface unit which receives content, a determination unit which determines whether there is a three-dimensional (3D) viewing setting regarding the received content, and a controller which controls the display unit to display the received content in a 3D mode if it is determined that there is a 3D viewing setting.

## Description

The present invention relates to a display apparatus and a method for displaying thereof, and more particularly, to a display apparatus which is capable of displaying received content in a three-dimensional (3D) mode, and a method for displaying thereof.

Recently, with the development of electronic technology, home appliances such as televisions have also been developed rapidly. Particularly, in the field of television apparatuses, three-dimensional television (3DTV) technology, which provides a sense of vividness and reality by adding depth to a conventional two-dimensional (2D) mono image, thereby allowing a viewer to perceive an audio and a visual stereoscopic sense, has developed fast.

The 3DTV broadcast technology is a technology which creates additional information from a 2D image when applying a viewer's two eyes and stereoscopic vision technology, and uses the additional information to provide a viewer with a sense of vividness and reality as if the viewer is actually in a place where the image is being created.

These days, almost all international exhibitions and events display exhibition facilities employing this 3D image technology, and thus a viewer can enjoy wonderful stereoscopic images. Sometimes, a 3D image, which gives a totally different effect from a conventional two-dimensional image, is so realistic that a viewer tries to reach for the image by stretching his or her arms or tries to escape from an approaching subject in the image unconsciously.

However, watching a 3D image for a prolonged period of time may result in negative influences to the viewer. For example, the viewer may have bloodshot eyes, feel fatigue in his or her eyes, or in some extreme cases, may have bad health conditions. Therefore, a method for a viewer to set a viewing environment freely, such as restricting a time to watch a 3D image, is needed.

One or more exemplary embodiments of the present invention provide a display apparatus which is capable of displaying received content in a 3D mode based on a 3D viewing setting set by a user and a method for displaying thereof.

According to an aspect of the present invention, there is provided a displaying method of a display apparatus, the displaying method including receiving content, determining whether there is a 3D viewing setting regarding the received content, and displaying the received content in a 3D mode if it is determined that there is the 3D viewing setting.

The content may include a broadcast program provided by a broadcasting station or a video provided by an external apparatus.

The method may further include displaying an electronic program guide (EPG) or a video list to set a 3D viewing of the content.

The displaying the EPG or the video list may include displaying available options while setting the 3D viewing.

The available options may include at least one of a title of the content, a reproducing time of the content, an identifier to indicate either a 2D image or a 3D image, and a 3D processing method.

The 3D viewing setting may include at least one of whether to display the content in a 3D mode and a 3D processing method of the content.

The method may further include putting a restriction on a 3D viewing time of the content if it is determined that a user's 3D viewing time exceeds a predetermined time.

The method may further include notifying the user of a restriction on a 3D viewing time of the content if it is determined that the user's 3D viewing time exceeds a predetermined time.

The 3D processing method may include at least one of a frame packing method, a side-by-side method, and a top and bottom method.

The method may further include automatically converting the 3D mode into a 2D mode if content which is being displayed in the 3D mode is terminated.

The method may further include receiving a user command, and the 3D viewing setting may be set according to the user command.

According to another aspect of the present invention, there is provided a display apparatus including a display unit, a communication interface unit which receives content, a determination unit which determines whether there is a 3D viewing setting regarding the received content, and a controller which, if it is determined that there is a 3D viewing setting, controls the display unit to display the received content in a 3D mode.

The content may include one of a broadcast program provided by a broadcasting station or a video provided by an external apparatus.

The controller may control the display unit to display an EPG or a video list to set a 3D viewing of the content.

The controller may control the display unit to display available options while setting the 3D viewing.

The available options may include at least one of a title of the content, a reproducing time of the content, an identifier to indicate either a 2D image or a 3D image, and a 3D processing method.

The 3D viewing setting may include at least one of whether to display the content in a 3D mode and a 3D processing method of the content.

If it is determined that a user's 3D viewing time exceeds a predetermined time, the controller may put a restriction on a 3D viewing time of the content.

If it is determined that the user's 3D viewing time exceeds a predetermined time, the controller may notify the user of a restriction on a 3D viewing time of the content.

The 3D processing method may include at least one of a frame packing method, a side-by-side method, and a top and bottom method.

If content which is being displayed in the 3D mode is terminated, the controller may automatically convert the 3D mode into a 2D mode.

The display apparatus may further include a user interface unit which receives a user command, and the 3D viewing setting may be set according to the user command.

The above and/or other aspects will be more apparent by describing certain exemplary embodiments with reference to the accompanying drawings, in which:
FIG. 1 is a view illustrating a display apparatus according to an exemplary embodiment;
FIG. 2 is a view illustrating an example of an EPG;
FIG. 3 is a view illustrating an example of a video list provided by an external apparatus;
FIG. 4 is a flowchart illustrating a displaying method of a display apparatus according to an exemplary embodiment;
FIG. 5 is a flowchart illustrating a displaying method of a display apparatus according to another exemplary embodiment; and
FIG. 6 is a flowchart to explain FIG. 5 in greater detail.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

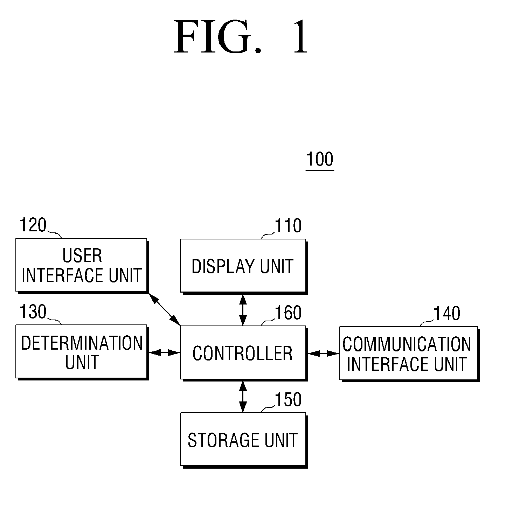

FIG. 1 is a view illustrating a display apparatus according to an exemplary embodiment.

Referring to FIG. 1, the display apparatus 100 includes a display unit 110, a user interface unit 120, a determination unit 130, a communication interface unit 140, a storage unit 150, and a controller 160.

The display unit 110 displays content which is provided as a 2D image or as a 3D image.

The content may include a broadcast program provided by a broadcasting station, a video provided by a storage apparatus such as a memory stick or a external hard disk, a video provided by a personal digital assistant (PDA) or a portable multimedia player (PMP), a video provided by a digital video disk player (DVDP) or a Blu-ray disk player (BDP), and a video provided by an external apparatus through a digital living network alliance (DLNA) protocol. In addition, the content may include a video stored in the storage unit 150 of the display apparatus.

The display unit 110 may display an EPG including additional information regarding the content or display a video list including additional information regarding the content.

The display unit 110 may display at least one of an EPG, a video list, and a pop-up window in order to distinguish content with a 3D viewing setting from content without a 3D viewing setting.

The user interface unit 120 receives a user command.

The user interface unit 120 may be displayed on the display unit 110 in the form of a pop-up window. The user interface unit 120 may be an EPG or a video list.

Specifically, the user interface unit 120 may receive a 3D viewing setting.

In addition, the user interface unit 120 may receive a user command to restrict the viewing time of a 3D image or set the 3D image viewing time during a predetermined entire viewing time.

For example, the user interface unit 120 may receive an entire amount of viewing time to view a 3D image on Monday. In addition, the user interface unit 120 may receive an entire amount of viewing time to view a 3D image from Monday to Friday, or may receive a user command to restrict 3D image viewing time on each day to less than a certain number of hours per day. In addition, the user interface unit 120 may receive a user's command to restrict a 3D image viewing time on a specific date or during a predetermined entire time period. However, the technical feature of the exemplary embodiments is not limited to the above conditions.

In addition, the user interface unit 120 may receive a user command to perform user authentication, and may receive a user identification (ID), password, gender, age, and so forth.

The determination unit 130 determines whether there is a 3D viewing setting regarding received content. Herein, the 3D viewing setting may include at least one of information regarding whether to display content in a 3D mode, how to perform 3D processing on content, and whether there is a time restriction on viewing a 3D image. In addition, the 3D viewing setting may be set according to a user command input from the user interface unit 120.

If content is set to be viewed in a 3D mode, the determination unit 130 may determine whether the content can be viewed in a 3D mode based on the input user command.

In addition, the determination unit 130 may determine whether a user's 3D viewing time exceeds a predetermined time by comparing the user's 3D viewing time with the predetermined time. The predetermined time may be input from the user interface unit 120 and may be changed.

The determination unit 130 may compare a content reproducing time included in additional information with an input entire viewing time. Specifically, the determination unit 130 may deduct time spent on viewing a 3D image from a predetermined time and compare a content reproducing time so as to determine whether the content can be viewed in a 3D mode.

If it is determined that there is no time spent on viewing a 3D image, the determination unit 130 may determine whether content can be viewed in a 3D mode by comparing a predetermined time with a content reproducing time.

The communication interface unit 140 receives content and additional information regarding the content.

The additional information includes at least one of a content title, a content reproducing time, an identifier to indicate either a 2D image or a 3D image, and a 3D processing method.

Herein, the 3D processing method may include at least one of a frame packing method, a side-by-side method, and a top and bottom method.

If a content reproducing time approaches, the communication interface unit 140 may receive content such as a broadcast program provided by a broadcasting station or a video provided by an external apparatus according to a program viewing reservation.

The communication interface unit 140 may include at least one of a USB communication interface, a network interface, or an interface to receive a broadcast signal.

The storage unit 150 may store an EPG, a video list, additional information, a broadcast program or a video provided by an external apparatus, information regarding restriction on 3D image viewing time such as entire 3D image viewing time or 3D image viewing time designated for each day, or an application or program to reproduce a video received from an external apparatus.

The controller 160 controls overall operation of the display apparatus 100.

Specifically, if it is determined that there is a 3D viewing setting, the controller 160 controls the display unit 110 to display received content in a 3D mode.

The controller 160 may control the display unit 110 to display an EPG or a video list to set a 3D image setting of content. In addition, the controller 160 may control the display unit 110 to display an available option which can be selected while setting a 3D image. Herein, the available option may include at least one of a content title, a content reproducing time, an identifier to indicate either a 2D image or a 3D image, and a 3D processing method.

If it is determined that a user's 3D viewing time exceeds a predetermined time, the controller 160 may restrict a 3D viewing time of the content.

In addition, if it is determined that a user's 3D viewing time exceeds a predetermined time, the controller 160 may notify the user of a restriction on the 3D viewing time. That is, the controller 160 may control the display unit 110 to display a message to restrict the 3D viewing time, or may control a speaker (not shown) to output a warning sound to indicate a restriction on the 3D viewing time.

Accordingly, the display apparatus 100 may display content in a 3D mode in accordance with a pre-set 3D viewing setting, and thus user convenience may be enhanced.

If the determination unit 130 determines that content can be viewed in a 3D mode, the controller 160 controls the display unit 110 to reserve the content to be viewed in a 3D mode and display the reserved 3D content to be viewed in a 3D mode.

If the determination unit 130 determines that the content provides a 3D image based on additional information received from the communication interface unit 140, the controller 160 may reserve content to be viewed in a 3D mode according to at least one 3D processing method included in the received additional information.

Alternatively, if the determination unit 130 determines that the content does not provide a 3D image based on additional information received from the communication interface unit 140, the controller 160 may convert content from a 2D mode into a 3D mode and reserve the converted content to be viewed in a 3D mode.

If a user command to perform user authentication is input through the user interface unit 120, the controller 160 performs user authentication. In addition, the controller 160 may further restrict the entire viewing time of a 3D image input through the user interface unit 120 based on the user authentication.

In addition, the display apparatus 100 may further include a conversion unit (not shown) which converts a 2D image into a 3D image or 3D image into a 2D image. In this case, the conversion unit (not shown) may perform conversion of 3D processing methods.

The display apparatus 100 may preset 3D image viewing conditions through user authentication so that, for example, a child who is ten years old cannot watch a 3D image or cannot watch the 3D image more than one hour a day. The display apparatus 100 may also restrict a 3D image viewing time to be less than one hour a day based on user authentication while maintaining two hours of entire 3D image viewing time.

For example, the display apparatus may receive a user command to perform user authentication from the user interface unit 120 and may perform user authentication under the control of the controller 160.

Subsequently, the user interface unit 120 may receive an amount of an entire 3D viewing time from the user interface unit 120, determine whether the restriction on the 3D image viewing time is valid based on user authentication, and reserve a 3D image viewing according to the determination result.

Accordingly, a user may set a 3D image viewing time differently for each viewer, and thus user convenience may be enhanced.

The user authentication can be performed before determining whether the restriction on the 3D image viewing time is valid, and the user authentication may be performed after an entire 3D image viewing time is input.

Accordingly, as a user may not be exposed to a 3D image for a prolonged period of time or may not watch a wrongly-set 3D image unnecessarily, possible eye fatigue can be prevented. Therefore, user convenience may be enhanced.

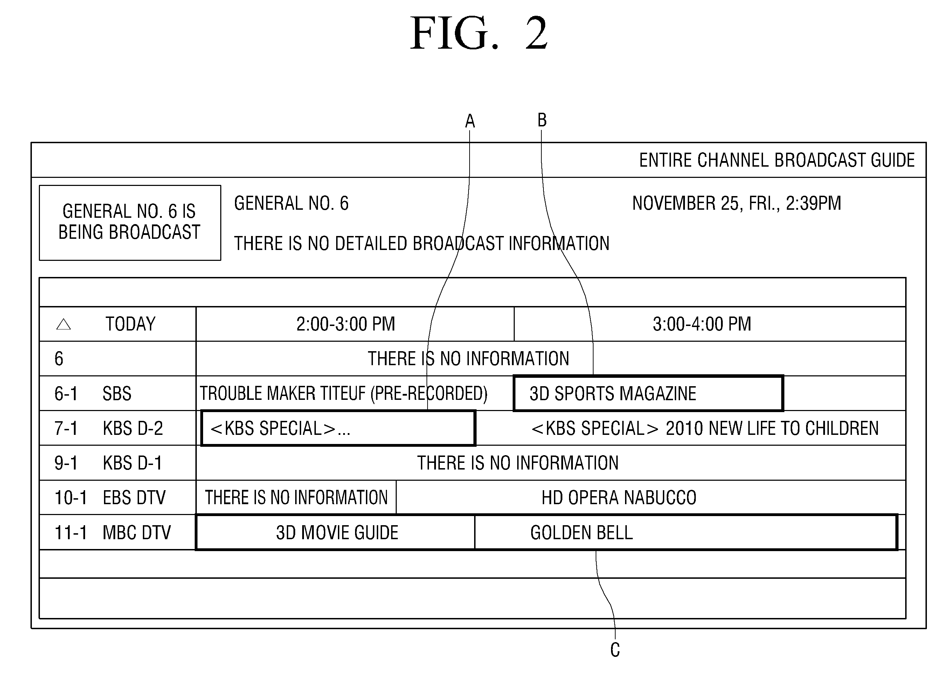

FIG. 2 is a view illustrating an example of an EPG.

If content to be received from the communication interface unit 140 is a broadcast image, that is, a broadcast program, a user may set various 3D viewing conditions such as putting a restriction on 3D image viewing time, setting a 2D image to a 3D mode, setting a 3D image to a 2D mode, setting a 3D processing method and so forth using an EPG.

Specifically, the user may set 3D viewing conditions by selecting at least one of available options displayed on the EPG from among an option to convert and display a 2D image into a 3D image, an option to convert and display a 3D image into a 2D image, and an option to display various 3D processing methods.

For example, if an option to convert and display a 2D image into a 3D image is selected by the user, the controller 160 may control the conversion unit (not shown) to convert a broadcast program provided in a 2D image into a program in a 3D image and control the display unit 110 to display the converted 3D broadcast program.

Referring to FIG. 2, an EPG provided by a broadcasting station may include a broadcast time or various information regarding broadcast programs according to broadcast channels. Various information displayed on the EPG may be additional information. That is, available options displayed on the EPG may be additional information.

Specifically, the additional information may include information regarding a title of a provided broadcast program, a broadcast time, and an identifier to indicate whether the provided broadcast program is a 2D image or a 3D image. In FIG. 2, only a 3D image is marked as 3D, but a 2D image may also be marked as 2D.

In addition, the additional information may include information regarding image quality such as whether the broadcast program is an HD image or not, a broadcast company which provides the broadcast program, a brief story of the broadcast program, and the actors starring in the broadcast program.

If "KBS special" which is broadcast from 2:00 to 2:50 pm on channel 7-1 is provided by a broadcasting station in a 2D image, a user may reserve to convert the "KBS special" into a 3D image and display the converted program by selecting area A.

Of course such a viewing reservation may be performed before the "KBS special" is reproduced. Accordingly, if it is 2:00 pm on November 25, the "KBS special" provided by a broadcasting station in a 2D image is converted into a 3D image and displayed.

Herein, the view reservation means to make a reservation so that when a content reproducing time arrives, the content is displayed as a 3D image or a 2D image. Furthermore, the viewing reservation allows not only the content to be displayed as a 3D image or a 2D image when the content reproducing time arrives, but also allows a current channel to be automatically changed into a reserved channel. That is, the viewing reservation may be a broader concept including a 3D viewing setting.

In this case, a 3D viewing reservation (that is, a 3D viewing setting) may be performed using a viewing reservation menu provided through a new pop-up window. Alternatively, a specific portion of a broadcast program may be reserved for being viewed as a 3D image by selecting a specific area of the EPG illustrated in FIG. 2, and if the specific area of the EPG is selected once again, the 3D image viewing reservation may be cancelled.

Meanwhile, it can be seen that "Sports Magazine" provided on channel 6-1 at 3:00 pm on November 25 is provided as a 3D image through additional information. In this case, a user may select area B to make a viewing reservation (that is, a 3D viewing setting) so that "Sports Magazine" can be displayed using a 3D image processing method.

For example, if "Sports Magazine" is provided by a broadcasting station according to a side-by-side method, the user may change the 3D image processing method from the side-by-side method to a top and bottom method.

As illustrated in area C on the EPG, "Movie Guide" which is provided as a 3D image ends at 2:50 pm and "Golden Bell" which is provided as a 2D image is broadcast at 3:00 pm. In this case, the display apparatus 100 may be set so that the 3D image is converted into the 2D image and reproduced when it becomes 2:50 pm.

Meanwhile, a broadcast program with a 3D viewing setting set may be displayed distinctively from those without a 3D viewing setting. For example, if "Sports Magazine" on channel 6-1 is set to be reproduced as a 3D image, the display unit 110 may display "Sports Magazine" to be highlighted, to be flickering, to have a different color, or to have a specific icon indicating the 3D viewing setting on the EPG. In addition, the display unit 110 may display which 3D image processing method is used as an icon on the EPG, so that a user may easily recognize what kind of 3D image processing method is set.

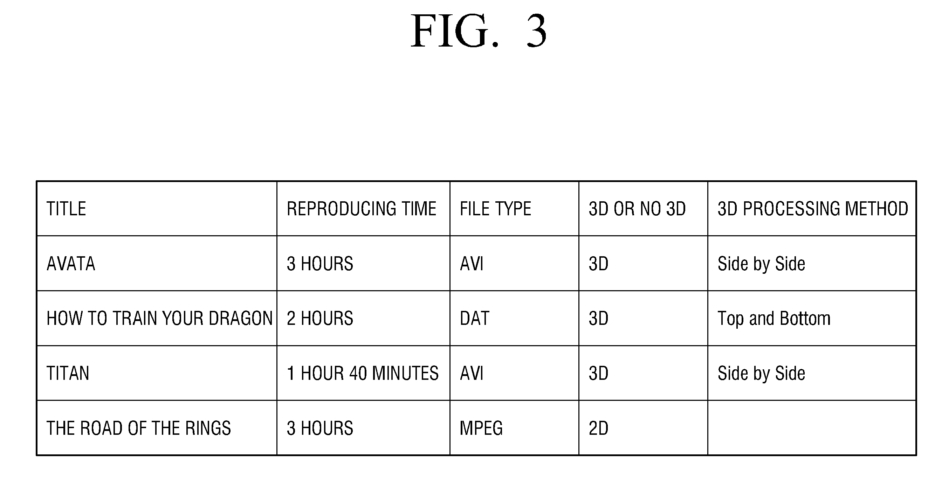

FIG. 3 is a view illustrating an example of a video list provided by an external apparatus.

If content to be received from the communication interface unit 140 is a video in a file, a user may set various 3D viewing conditions such as putting a restriction on 3D image viewing time, setting a 2D image to a 3D mode, setting a 3D image to a 2D mode, setting a 3D processing method and so forth using a video list.

Specifically, the user may set 3D viewing conditions by selecting at least one of available options displayed on a video list from among an option to convert and display a 2D image into a 3D image, an option to convert and display a 3D image into a 2D image, and an option to display various 3D processing methods.

Referring to FIG. 3, a video list may include various additional information such as a title, a reproducing time, a file type, whether it is a 3D image, a 3D processing method, a brief story, a movie producer, an actor, and so forth.

As illustrated in FIG. 3, "The Road of the Rings" is provided in a 2D image, and thus a user may make a viewing reservation (that is, a 3D viewing setting) so that "The Road of the Rings" may be converted into a 3D image and reproduced.

A list of a plurality of videos may be provided in the video list illustrated in FIG. 3, so that "Avata" can be displayed from 5:00 to 8:00 and "The Road of the Rings" can be displayed from 8:10 to 11:10, just like the EPG illustrated in FIG. 2.

Such a video list may be displayed using a new pop-up window. Accordingly, a video to be reproduced may be added, deleted, or changed.

As illustrated in FIG. 2, the display unit 110 may display a 3D image processing method in a way that a video list with a 3D viewing setting can be displayed distinctively form a video list without a 3D viewing setting.

Hereinafter, what is already explained above with reference to FIG. 2 will not be described.

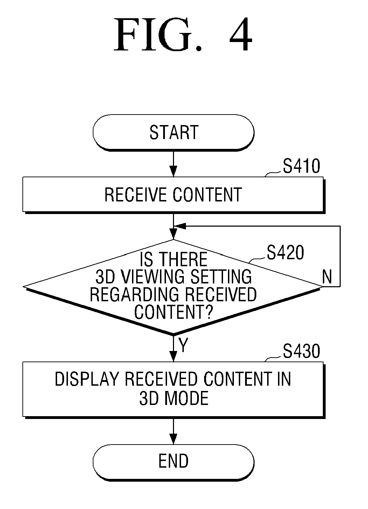

FIG. 4 is a flowchart illustrating a displaying method of a display apparatus according to an exemplary embodiment.

Referring to the displaying method of the display apparatus illustrated in FIG. 4, the communication interface unit 140 receives content (S410), and the determination unit 130 determines whether there is a 3D viewing setting regarding the received content (S420).

If it is determined that there is a 3D viewing setting (S420-Y), the display unit 110 displays the received content in a 3D mode (S430).

Therefore, according to the displaying method of the display apparatus, content can be displayed in a 3D mode in accordance with a pre-set 3D viewing setting. Therefore, user convenience may be enhanced.

The displaying method of the display apparatus may further include displaying an EPG or a video list to set 3D viewing. In this case, displaying the EPG or the video list may display available options while setting a 3D viewing. The available options include at least one of a content title, a content reproducing time, an identifier to indicate either a 2D image or a 3D image, and a 3D processing method.

The displaying method of the display apparatus may further include putting a restriction on 3D viewing of content if it is determined that a user's 3D viewing time exceeds a predetermined time.

The displaying method of the display apparatus may further include notifying a user of a restriction on 3D viewing of content if it is determined that a user's 3D viewing time exceeds a predetermined time.

The displaying method of the display apparatus may further include automatically converting a 3D mode into a 2D mode if content being displayed in a 3D mode has ended.

The displaying method of the display apparatus may further include receiving a user command. In this case, a 3D viewing may be set according to the user command.

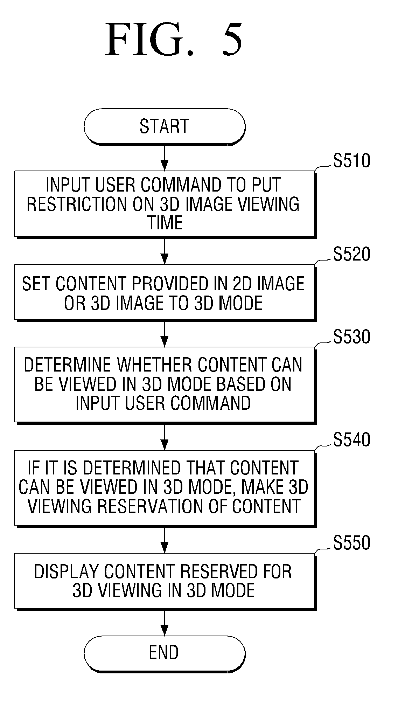

FIG. 5 is a flowchart illustrating a displaying method of a display apparatus according to another exemplary embodiment.

According to the displaying method of the display apparatus illustrated in FIG. 5, the user interface unit 120 receives a user command to put a restriction on a 3D image viewing time (S510).

Content which is provided in a 2D image or a 3D image are set to a 3D mode (S520).

The determination unit 130 determines whether the content can be viewed in a 3D mode based on the input user command (S530).

If it is determined that the content can be viewed in a 3D mode, the controller 160 makes a viewing reservation to display the content in a 3D mode (S540).

The display unit 120 displays the reserved content in a 3D mode (S550).

According an exemplary embodiment, a user who uses a content market where most content is in the form of 2D images or is content without any additional information regarding a 3D image, does not have to set a 3D mode every time he or she changes a channel or content.

In addition, a user may put a restriction on 3D image viewing by using information such as PSI (Program Specific Information), SI (Service Information), PSIP (Program And System Information Protocol) on an EPG or a video list or information pre-set by the user, and thus user convenience may be enhanced.

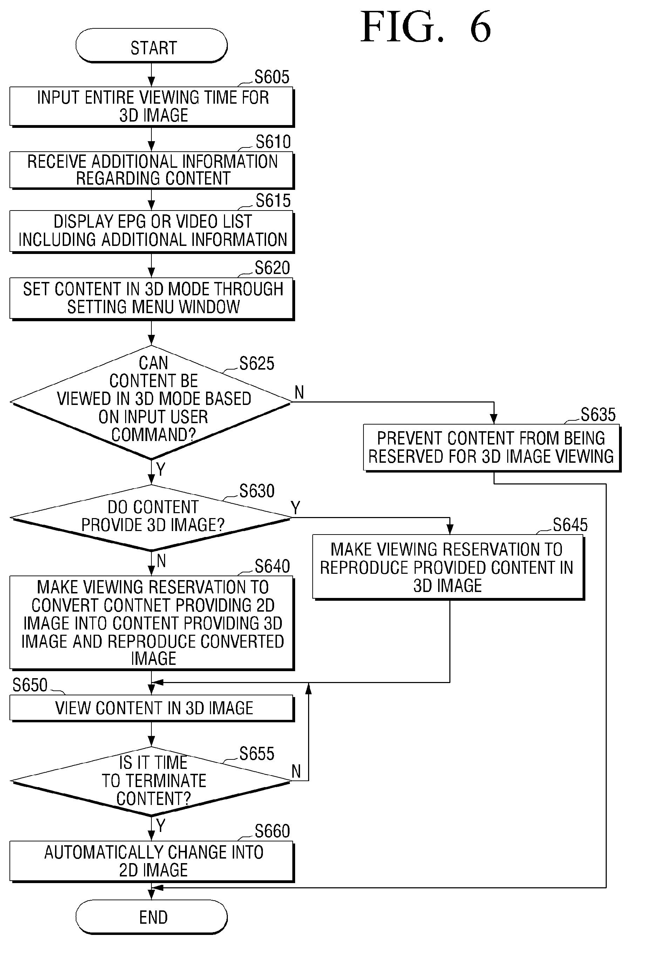

FIG. 6 is a flowchart to explain FIG. 5 in greater detail.

According to the displaying method of the display apparatus illustrated in FIG. 6, the interface unit 120 receives an entire 3D image viewing time (S605).

The communication interface unit 140 receives additional information regarding content (S610).

Subsequently, the display unit 110 displays an EPG or a video list including the additional information (S615).

Alternatively, step S605 may be performed after steps S610 and S615 are performed.

The user interface unit 120 may be set to display content to be provided in a 3D mode through a setting menu window (S620). In this case, the user interface unit 120 may set a 3D processing method.

Whether content can be viewed in a 3D mode is determined based on an input user command (S625). For example, whether content can be viewed in a 3D mode is determined based on whether a user sets a 3D image viewing time to more than 10 hours even after the user sets an entire 3D image viewing time to 10 hours.

If it is determined that provided content can be viewed in a 3D mode (S625-Y), it is determined whether the provided content includes a 3D image (S630). The determination unit 130 may determine whether the provided content includes a 3D image using additional information received from the communication interface unit 140.

Alternatively, if it is determined that provided content cannot be viewed in a 3D mode (S625-N), the display apparatus 100 may not allow the content to be reserved for being displayed in a 3D image under the control of the controller 160 (S635).

If it is determined that the provided content does not include a 3D image (S630-N), a viewing reservation can be made to convert the content providing a 2D image into content providing a 3D image and display the converted image (S640).

Alternatively, if it is determined that the provided content does include a 3D image (S630-Y), a viewing reservation can be made to reproduce the content in a 3D image (S645).

Subsequently, the display unit 110 may display the content in a 3D image based on the viewing reservation made in step S640 and step S645 (S650).

Whether it is time to terminate content reproduction is determined (S655). If it is determined that it is time to terminate content reproduction (S655-Y), the content can be automatically converted into a 2D image and the next content can be displayed (S660).

Alternatively, if it is determined that it is not time to terminate content reproduction (S655-N), the content is displayed in a 3D image (S650).

Although a few embodiments have been shown and described, it would be appreciated by those skilled in the art that changes may be made to these embodiments without departing from the invention, the scope of which is defined in the claims.

## Claims

1. A displaying method of a display apparatus, the method comprising:
receiving content;
determining whether there is a three-dimensional (3D) viewing setting regarding the received content; and
if it is determined that there is the 3D viewing setting, displaying the received content in a 3D mode.

2. The method as claimed in claim 1, further comprising:
displaying an electronic program guide (EPG) or a video list to set a 3D viewing of the content.

3. The method as claimed in claim 2, wherein the displaying the EPG or the video list comprises displaying available options while setting the 3D viewing, wherein the available options include at least one of a title of the content, a reproducing time of the content, an identifier to indicate either a two-dimensional (2D) image or a 3D image, and a 3D processing method.

4. The method as claimed in any one of claims 1 to 3, wherein the 3D viewing setting includes at least one of whether to display the content in a 3D mode and a 3D processing method of the content, wherein the 3D processing method includes at least one of a frame packing method, a side-by-side method, and a top and bottom method.

5. The method as claimed in any one of the preceding claims, further comprising:
if it is determined that a user's 3D viewing time exceeds a predetermined time, setting a restriction on a 3D viewing time of the content.

6. The method as claimed in any one of the preceding claims, further comprising:
if it is determined that a user's 3D viewing time exceeds a predetermined time, notifying a user of a restriction on a 3D viewing time of the content.

7. The method as claimed in any one of the preceding claims, further comprising:
if content which is being displayed in the 3D mode is terminated, automatically converting the 3D mode into a two-dimensional (2D) mode.

8. A display apparatus, comprising:
a display unit;
a communication interface unit which receives content;
a determination unit which determines whether there is a 3D viewing setting regarding the received content; and
a controller which, if it is determined that there is a 3D viewing setting, controls the display unit to display the received content in a 3D mode.

9. The display apparatus as claimed in claim 8, wherein the controller controls the display unit to display an electronic program guide (EPG) or a video list to set a 3D viewing of the content.

10. The display apparatus as claimed in claim 9, wherein the controller controls the display unit to display available options while setting the 3D viewing, wherein the available options include at least one of a title of the content, a reproducing time of the content, an identifier to indicate either a two-dimensional (2D) image or a 3D image, and a 3D processing method.

11. The display apparatus as claimed in any one of claims 8 to 10, wherein the 3D viewing setting includes at least one of whether to display the content in a 3D mode and a 3D processing method of the content, wherein the 3D processing method includes at least one of a frame packing method, a side-by-side method, and a top and bottom method.

12. The display apparatus as claimed in any one of claims 8 to 11, wherein the controller, if it is determined that a user's 3D viewing time exceeds a predetermined time, sets a restriction on a 3D viewing time of the content.

13. The display apparatus as claimed in any one of claims 8 to 12, wherein the controller, if it is determined that a user's 3D viewing time exceeds a predetermined time, notifies a user of a restriction on a 3D viewing time of the content.

14. The display apparatus as claimed in any one of claims 8 to 13, wherein the controller, if content which is being displayed in the 3D mode is terminated, automatically converts the 3D mode into a two-dimensional (2D) mode.

15. The display apparatus as claimed in any one of claims 8 to 14, further comprising:
a user interface unit which receives a user command, wherein the 3D viewing setting is set according to the user command.
